# EUROPEAN PATENT APPLICATION

(11) **EP 4 806 764 A1**
(43) Date of publication of application: **16.09.2026**
(21) Application number: 26157734.0
(22) Date of filing: 11.02.2026
(51) Int. Cl.: B62D 25/08, B62D 29/00

(54) **VEHICLE BODY STRUCTURE OF VEHICLE**

(30) Priority: 10.03.2025 JP 2025037213
(71) Applicant: MAZDA MOTOR CORPORATION, Hiroshima 730-8670 (JP)
(72) Inventor: Shimanaka, Tsuneki, Aki-gun, Hiroshima, 730-8670 (JP); Nakajima, Shumpei, Aki-gun, Hiroshima, 730-8670 (JP)
(74) Representative: Lorenz Seidler Gossel Part. mbB

(57) **Abstract**

The present invention relates to a suspension housing 11, which is provided to be spaced forward from a cabin front surface portion 700 constituting a front surface of a box-shaped cabin structure 1A, and a pair of left and right front frames 14 supporting the suspension housing 11 on both left and right sides of a front space of the cabin front surface portion 700 are provided. In the front space, the cast body 500 that is integrally formed by including a front frame corresponding portion 141 constituting a part of the front frame 14 and the suspension housing 11 is provided. A closed cross-sectional frame portion 142 of the front frame 14 includes: an upper arm support region UHZ provided with an upper arm attachment portion 145 of an upper arm 401 of a front suspension 400; and an extension region EZ extending forward from a front end portion of the front frame corresponding portion 141. A crash can 37 is coupled to a front end portion 14a of the extension region EZ. The present invention further relates to a vehicle having such suspension housing.

## Description

### [Technical Field]

The present invention relates to a vehicle body structure of a vehicle including: a dash panel that separates a cabin and a front space in front of the cabin from each other in a vehicle front-rear direction; and a pair of left and right front frames extending in the vehicle front-rear direction on both left and right sides of the front space, respectively.

### [Background Art]

Conventionally, as exemplified in Patent Literature 1, a front frame that is made of a steel sheet and constitutes a closed cross-section (a closed cross-sectional space) along a front-rear direction is known. The front frame in Patent Literature 1 includes: a closed cross-sectional frame portion that forms a sub-frame upper side portion provided with an upper arm attachment portion for attachment of an upper arm of a front suspension; and an extension member that further extends forward from a front end portion of the closed cross-sectional frame portion located in a front end portion of the upper arm attachment portion.

The closed cross-sectional frame portion and the extension member in Patent Literature 1 each constitute the closed cross-section along the front-rear direction by joining, to each other, end portions of plural steel sheets, and are configured to absorb frontal collision energy cooperatively by being plastically deformed in an order from the front in the event of a frontal collision of the vehicle (hereinafter referred to as the "frontal collision").

However, since the front frames made of the steel sheets, including the front frame in Patent Literature 1, are formed of the plural steel sheets, the number of components is possibly increased, and there is room for improvement from a viewpoint of reducing the number of components.

Meanwhile, in recent years, as exemplified in Patent Literature 2, a giga-cast body, entirety of which including not only the front frame but also a front-wheel suspension housing is integrally formed by a cast body, is known.

As disclosed in Patent Literature 2, when the giga-cast body that is integrally formed by including the front frame and the front-wheel suspension housing is adopted in a vehicle body front structure, there is an advantage that the number of components in a front portion of a vehicle body can be reduced.

Meanwhile, in the vehicle body front structure, when the frontal collision energy during the frontal collision is absorbed by the front frame, there is also a need for the front frame that is made of the steel sheet and whose plastic deformation is easily controlled as in Patent Literature 1.

### [Citation List]

### [Patent Literature]

[Patent Literature 1] JP2015-058858A
[Patent Literature 2] JP2023-537494A

### [Summary of Invention]

### [Technical Problem]

An object of the invention is to provide a vehicle body structure of a vehicle capable of stably absorbing frontal collision energy by controlling plastic deformation during a frontal collision while reducing the number of components.

### [Solution to Problem]

This object is solved by the a vehicle body structure according to claim 1 and a vehicle according to claim 15, wherein preferred embodiments are the subject-matter of the subclaims.

The invention according to claim 1 is a vehicle body structure of a vehicle including: a front-wheel suspension housing that is provided to be spaced forward from a cabin front surface portion constituting a front surface of a box-shaped cabin structure in which an outer frame of a cabin is formed in a box shape, and that covers a front suspension from above; a pair of left and right front frames that extends in a vehicle front-rear direction on both left and right sides of a front space provided in front of the cabin front surface portion and that supports the front-wheel suspension housing, in which the front space includes a cast body that is integrally formed by including a front frame corresponding portion that constitutes a part of the front frame and the front-wheel suspension housing, the front frame includes: the front frame corresponding portion; and a closed cross-sectional frame portion that is supported by the front frame corresponding portion from above, the front frame corresponding portion extends along a front-rear direction and a rear end portion thereof is joined to a vehicle body reinforcing member provided in the cabin front surface portion, the closed cross-sectional frame portion includes: a sub-frame upper side portion that constitutes a closed cross-section along the front-rear direction by joining, to each other, end portions of plural steel sheets and that is provided with an attachment portion of an upper arm of the front suspension; and an extension portion that extends to the front of a front end portion of the front frame corresponding portion from the front end portion of the attachment portion of the upper arm (that is, a front end portion of the sub-frame upper side portion), and a shock absorbing member that absorbs a frontal collision load is coupled to a front end portion of the extension portion.

According to the configuration, it is possible to reduce the number of components by employing the cast body (a giga-cast body) and integrally forming the front frame corresponding portion and the front-wheel suspension housing. Meanwhile, during a frontal collision, in the front frame, the closed cross-sectional frame portion, which is made of a steel sheet, and plastic deformation of which is easily controlled, mainly absorbs frontal collision energy. Thus, the front frame corresponding portion as the cast body and the closed cross-sectional frame portion, which is made of the steel sheet, can cooperatively and stably absorb the frontal collision energy. Therefore, it is possible to stably absorb the frontal collision energy while reducing the number of the components.

As an embodiment of the invention, while a width in an up-down direction of the closed cross-sectional frame portion may be set to be gradually reduced to the rear, a width in the up-down direction of the front frame corresponding portion may be set to be gradually reduced to the front.

According to the configuration, in the front frame including the front frame corresponding portion as the cast body and the closed cross-sectional frame portion, which is made of the steel sheet, it is possible to take advantage of frontal collision load absorbing performance of the closed cross-sectional frame portion, the width of which in the up-down direction is gradually increased to the front, and to secure a support force of the closed cross-sectional frame portion by the front frame corresponding portion, the width of which in the up-down direction is gradually increased to the rear.

As a further embodiment of the invention, while the closed cross-sectional frame portion may be arranged such that an axis thereof along the front-rear direction is located on the same straight line as an axis of the shock absorbing member along the front-rear direction, the front frame corresponding portion may be arranged such that an axis thereof along the front-rear direction is displaced upward from the axis of the shock absorbing member along the front-rear direction until reaching the same height as an upper surface portion of the shock absorbing member or higher, and the front frame corresponding portion may be formed such that a width thereof in the up-down direction is gradually increased to the rear from the front end portion of the front frame corresponding portion.

According to the configuration, the shock absorbing member is gradually crushed in the front-rear direction from the front end portion thereof during the front collision without being hindered by the front frame corresponding portion, which is disposed directly above the closed cross-sectional frame portion, and thus it is possible to secure a crash margin of the shock absorbing member.

Thus, also in the configuration in which the front frame includes the front frame corresponding portion as the cast body, it is possible to secure collision absorption performance of not only the closed cross-sectional frame portion but also the shock absorbing member.

As further embodiment of the invention, the front frame corresponding portion may include an abutment portion that abuts a rear end portion of the closed cross-sectional frame portion from the front.

According to the configuration, even when the closed cross-sectional frame portion receives the frontal collision load during the frontal collision, it is possible to reliably receive the closed cross-sectional frame portion by the abutment portion, which is provided in the front frame corresponding portion, in a state where the rear end thereof reliably abuts.

Thus, it is possible to transmit and disperse a frontal collision load from the closed cross-sectional frame portion to the front frame corresponding portion, which supports the closed cross-sectional frame portion from above.

Preferably the front frame corresponding portion as the cast body and the closed cross-sectional frame portion, which is made of the steel sheet, are configured and arranged to cooperatively absorb frontal collision energy.

In accordance with a preferred embodiment, the front frame corresponding portion is disposed directly above the closed cross-sectional frame portion.

According to an other embodiment of the present invention the closed cross-sectional frame portion extends linearly in the front-rear direction at a position below the front frame corresponding front portion.

Preferably, the front frame corresponding front portion has an H-shaped cross section. It is preferred that the H-shaped cross section is orthogonal to the front-rear direction by a base plate portion along the vehicle width direction, an outer wall portion that protrudes in the up-down direction from an outer end of the base plate portion in the vehicle width direction, and an inner wall portion that protrudes in the up-down direction from an inner end of the base plate portion in the vehicle width direction.

In accordance with a further embodiment of the present invention a rear end portion of the front frame rear portion is formed with, as a rear end flange portion along a peripheral edge of a rear opening, an upper wall rear end flange portion, an outer wall rear end flange portion, an inner wall rear end flange portion, and a lower wall rear end flange portion.

Further, the upper wall rear end flange portion may be formed to protrude upward from a rear end of the upper wall portion of the front frame rear portion along the rear end.

Preferably, the outer wall rear end flange portion is formed to protrude outward from a rear end of the outer wall portion of the front frame rear portion toward the vehicle width outer side along the rear end and/or the inner wall rear end flange portion is formed to protrude from a rear end of the inner wall portion of the front frame rear portion to the vehicle width inner side along the rear end.

In accordance with a further embodiment of the present invention, the lower wall rear end flange portion is formed to protrude downward from a rear end of the lower wall portion of the front frame rear portion along the rear end.

The cast body may include one of more of the following elements: a pair of the left and right front frame corresponding portions, a pair of the left and right apron frame body portions, a pair of the left and right apron support frames, a pair of the left and right suspension housings, a pair of the left and right coupling margin portions, a bridge portion.

The cast body is preferably made of an aluminum alloy, in which one or more of these said elements are integrally molded.

The present invention further relates to a vehicle which comprises a vehicle body structure according to the present invention.

### [Advantageous Effects of Invention]

According to the invention, it is possible to provide the vehicle body structure of the vehicle capable of stably absorbing the frontal collision energy by controlling the plastic deformation during the frontal collision while reducing the number of the components.

### [Brief Description of Drawings]

[FIG. 1] FIG. 1 is a perspective view in which a main portion of a vehicle including a vehicle body structure according to the present embodiment is seen from a front side and a left side of a vehicle body.
[FIG. 2] FIG. 2 is a perspective view in which the main portion of the vehicle in FIG. 1 is seen from the front side and the left side of the vehicle body.
[FIG. 3] FIG. 3 is a side view in which the main portion of the vehicle including the vehicle body structure according to the present embodiment is seen from a right side.
[FIG. 4] FIG. 4 is a cross-sectional view of a central portion of a front frame in a vehicle width direction along a vehicle front-rear direction.
[FIG. 5] FIG. 5 is a cross-sectional view of the main portion of the vehicle that is taken along line A-A in FIG. 3 and seen from below.
[FIG. 6] FIG. 6 is a cross-sectional view of the main portion of the vehicle that is taken along line B-B in FIG. 3 and seen from the front side and the left side of the vehicle body.
[FIG. 7] FIG. 7 is a cross-sectional view of the main portion of the vehicle that is taken along line B-B in FIG. 3.
[FIG.8] FIG.8 is a front view of the main portion of the vehicle for which a cast body in FIG. 7 is omitted.
[FIG. 9] FIG. 9 is a perspective view in which the cast body in the present embodiment is seen from a rear side and the right side of the vehicle body.
[FIG. 10] FIG. 10 is a perspective view in which the main portion of the vehicle including the vehicle body structure of a vehicle according to the present embodiment is seen from a lower side and the left side of the vehicle body.
[FIG. 11] FIG. 11 includes cross-sectional views of the main portion of the vehicle, in which (a) is taken along line G-G in FIG. 7, (b) is taken along line H-H in FIG. 7, and (c) is taken along line I-I in FIG. 7, and which are seen from below.
[FIG. 12] FIG. 12 is a vertical cross-sectional view of a rear portion of the cast body, and illustrates a casting step of the cast body in the present embodiment.

### [Description of Embodiments]

As an embodiment of the invention, a description will hereinafter be made on a vehicle body structure of the vehicle according to the invention, which is applied to a front-engine, rear-wheel-drive (FR) sports car with reference to the drawings. In the drawings, an arrow Fr indicates a vehicle front direction, an arrow U indicates a vehicle up direction, an arrow W indicates a vehicle width direction, OUT indicates an outer side in the vehicle width direction (also referred to as a "vehicle width outer side"), and IN indicates an inner side in the vehicle width direction (also referred to as a "vehicle width inner side").

Since the vehicle body structure in the present embodiment is a substantially bilaterally symmetrical structure, a description will be centered on an apron frame 18 on a vehicle right side and a front frame 14. In the following description, each of front, rear, right, left, up, and down directions indicates a respective direction with a vehicle body being a reference unless otherwise specified, and "rein" stands for "reinforcement".

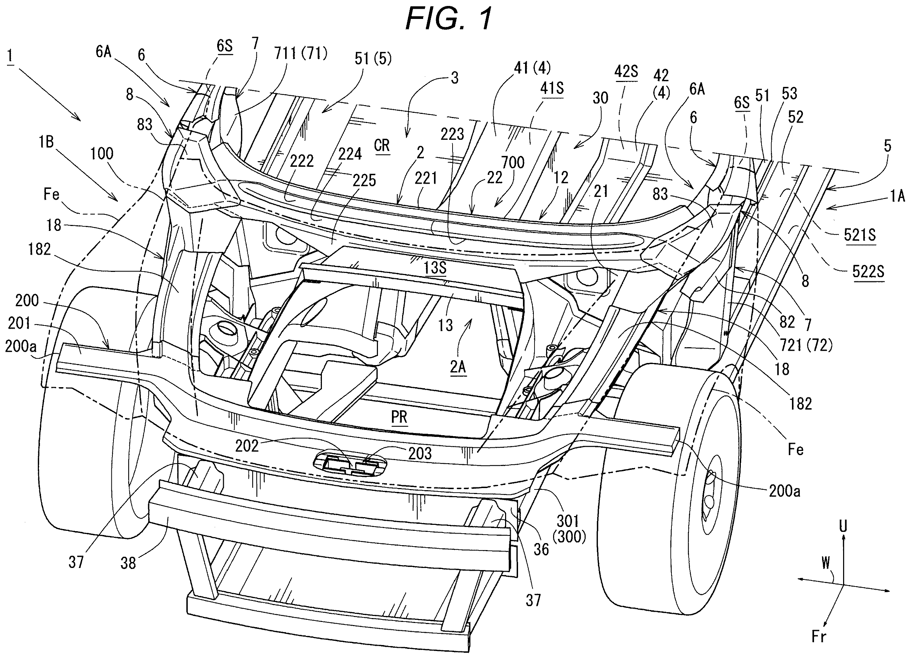

As illustrated in FIGs. 1, 2, and 3, a vehicle 1 in the present embodiment includes a vehicle body front structure 1B and a box-shaped cabin structure 1A on front and rear sides, respectively.

The box-shaped cabin structure 1A includes various vehicle reinforcing members and panel members constituting an outer frame of the cabin, and has a cabin CR therein by combining these elements in a box shape. The vehicle body front structure 1B is formed in a body front space provided in front of a front surface portion of such a box-shaped cabin structure 1A. The box-shaped cabin structure 1A will be described prior to the description of the vehicle body front structure 1B.

### (Outline of Box-Shaped Cabin Structure 1A)

The box-shaped cabin structure 1A includes, as the various vehicle reinforcing members and the panel members, a dash panel 2, a floor panel 3, a tunnel frame 4, a side sill 5, a front pillar 6, a hinge pillar 7, a cowl side rein 8, a torque box 9, and a dash lower rein 10.

### (Dash Panel 2)

As illustrated in FIGs. 1, 2, and 6, the dash panel 2 is provided in a vertical wall shape that separates the cabin CR inside the box-shaped cabin structure 1A and a power unit room PR in the front space thereof from each other in a front-rear direction.

Since the vehicle 1 in the present embodiment employs the front-engine, rear-wheel-drive system as described above, the power unit room PR is an engine room, and an engine (not illustrated) of a vertical arrangement type is arranged. However, in the present invention, a configuration of a power unit is not particularly limited as long as a power source of the vehicle is provided, and may include a motor and a speed reducer in a case of an electric vehicle, for example.

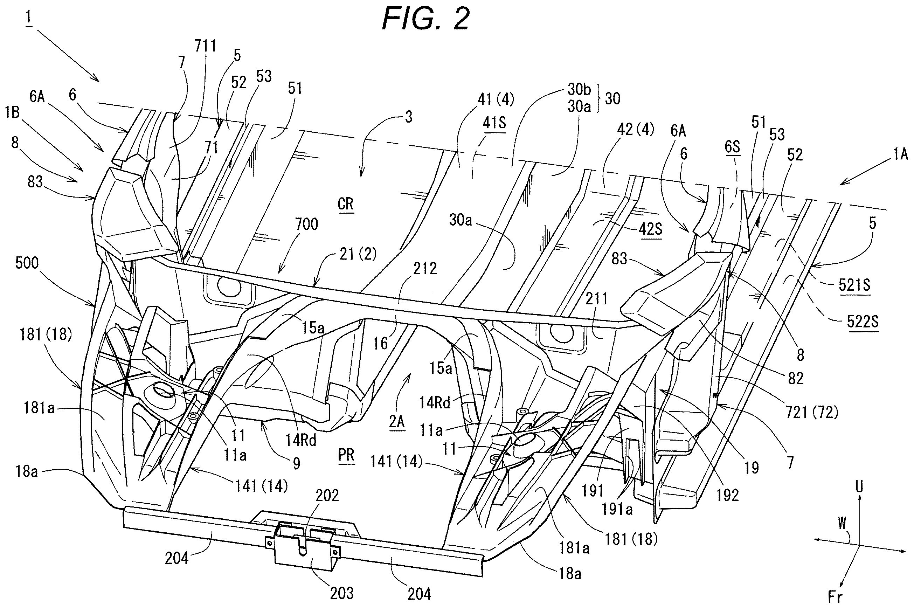

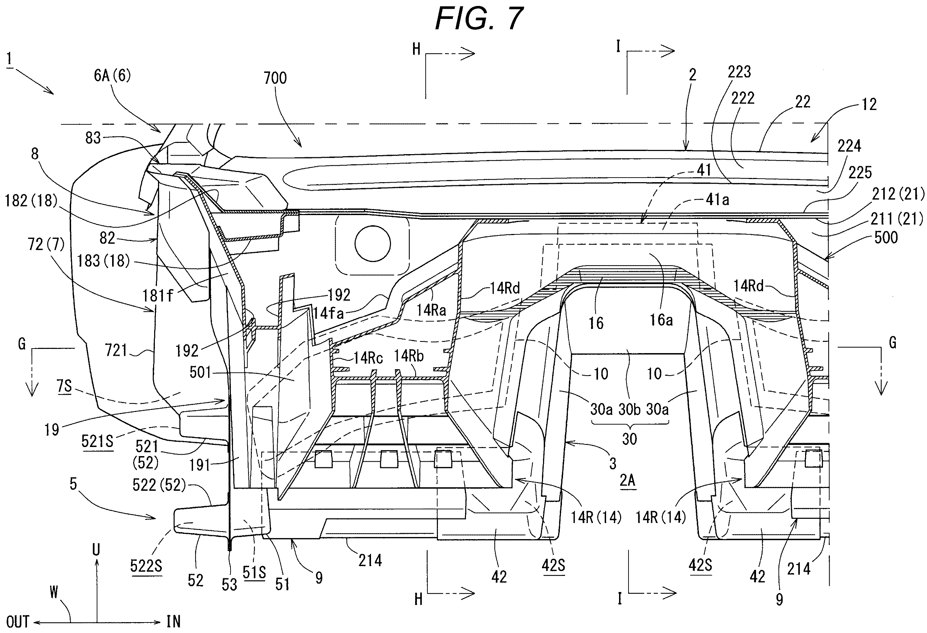

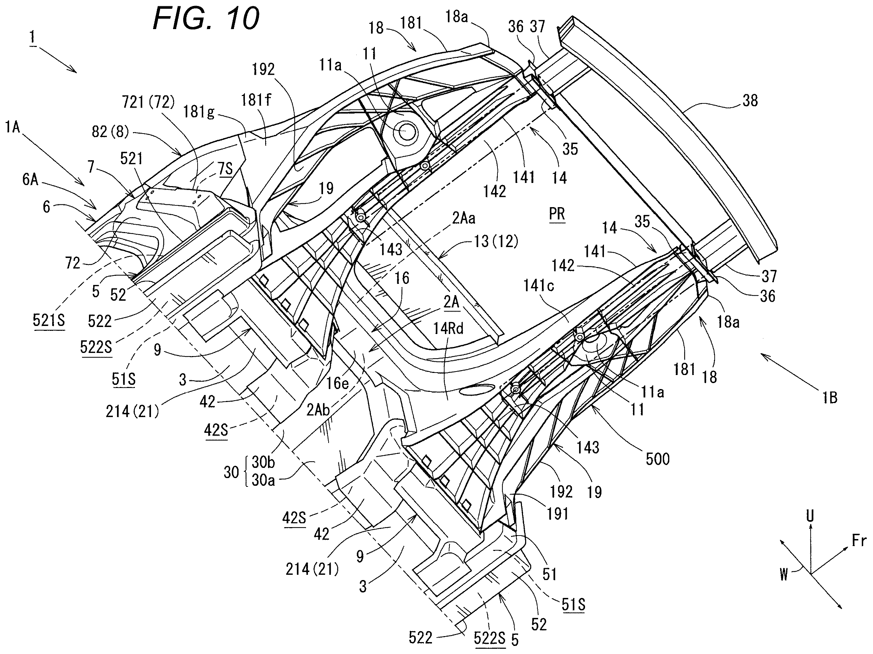

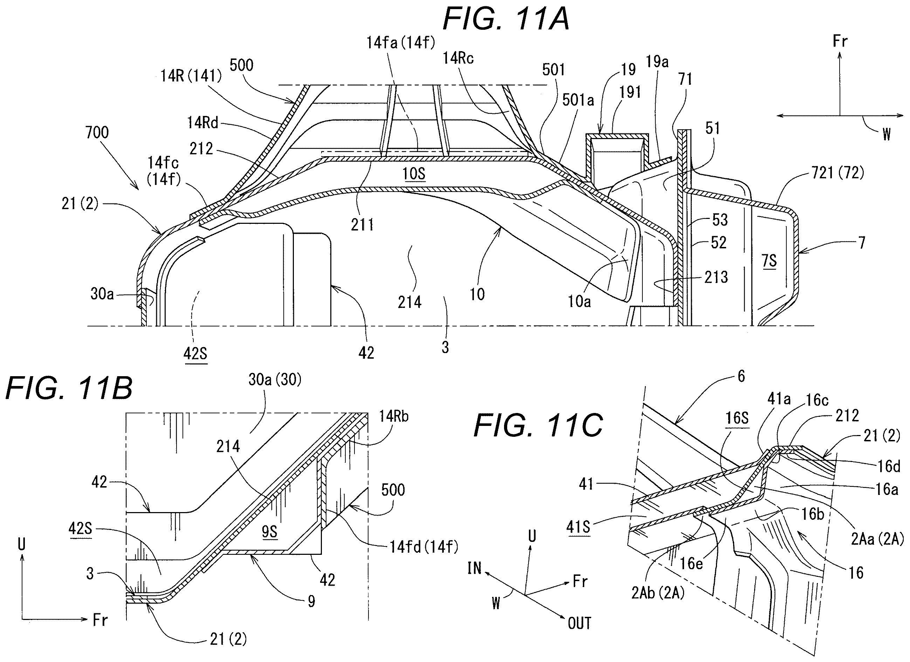

As illustrated in FIGs. 1 and 7, the dash panel 2 includes a lower dash panel 21 and an upper dash panel 22 provided above the lower dash panel 21. As illustrated in FIG. 2, the lower dash panel 21 includes: a vertical wall portion 211 along an up-down direction and the vehicle width direction; a front extending portion 212 that is formed to be bent in a manner to protrude forward from an upper end of the vertical wall portion 211; a vehicle width outer end flange portion 213 (see FIG. 11(a)) that is formed to be bent in a manner to protrude rearward from each end of the vertical wall portion 211 in the vehicle width direction; and a slant portion 214 (see FIGs. 10 and 11(b)) that is slanted downward to the rear from a lower end of the vertical wall portion 211.

As illustrated in FIG. 1, the upper dash panel 22 is installed in the front extending portion 212 (see FIG. 2) at an upper end of the lower dash panel 21, and is substantially formed in an S-shape in a side view along the vehicle width direction over substantially an entire length of the lower dash panel 21.

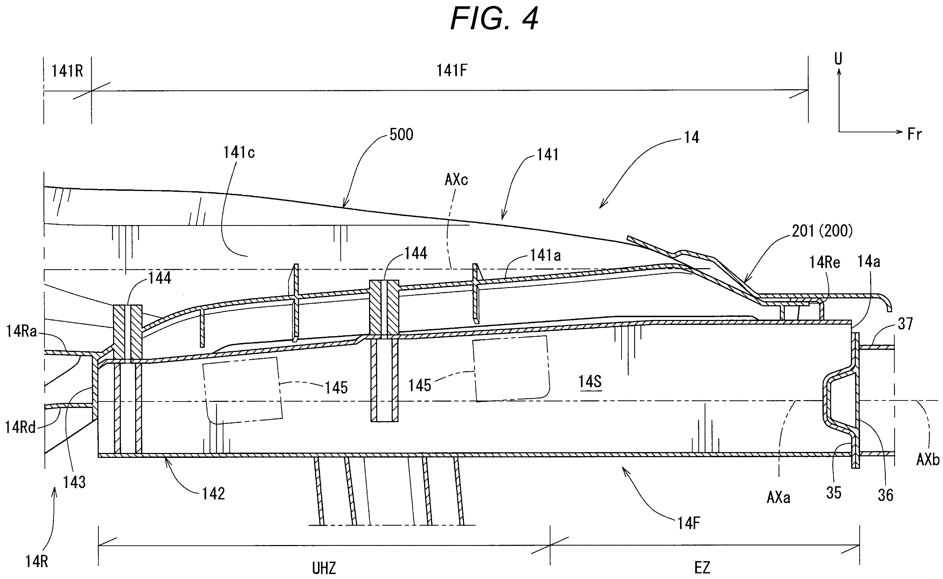

More specifically, as illustrated in FIGs. 2 and 4, the upper dash panel 22 is substantially formed in the S-shape in the side view by: an upper surface portion 221, an entire portion of which excluding both outer ends in the vehicle width direction is inclined downward to the front from a rear end in a front-low, rear-high shape; a bulging portion 222 that bulges forward and has an upper end continuous with a lower end of the upper surface portion 221; a vertical wall portion 224 that extends downward from a lower end of the bulging portion 222 via a corner rounded portion 223; and a lower surface portion 225 that extends forward from a lower end of the vertical wall portion 224. In addition, both of the outer end portions of the upper dash panel 22 in the vehicle width direction are integrally formed with outer edge flange portions (not denoted by reference signs), each of which extends rearward to the outer side in the vehicle width direction over a substantially entire length in the vehicle width up-down direction.

In the upper dash panel 22, the lower surface portion 225 is joined to the front extending portion 212 of the lower dash panel 21 described above by spot welding or the like, and the upper surface portion 221 thereof is joined to a lower portion of a front windshield (not illustrated) inclined in a front-down direction via an adhesive (not illustrated). In this way, the upper dash panel 22 supports the front windshield. As illustrated in FIG. 1, the left and right outer edge flange portions of the upper dash panel 22 are joined to a cowl side rein 8, which will be described below, from an inner side in the vehicle width direction.

### (Floor Panel 3)

The floor panel 3 has a front end portion that is integrally joined to a rear end portion of the slant portion 214 of the lower dash panel 21, and horizontally extends rearward from the front end portion in a manner to form a bottom surface of the cabin (See FIGs. 10 and 11(b)).

In addition, in a central portion of the floor panel 3 in the vehicle width direction, a tunnel portion 30 is formed along the front-rear direction as a unit or integrally.

As illustrated in FIGs. 2, 7, and 8, the tunnel portion 30 is formed such that a cross section orthogonal to the front-rear direction bulges upward in a gate shape by a pair of left and right side surface portions 30a and an upper surface portion 30b connecting upper ends of the side surface portions 30a in the vehicle width direction.

### (Tunnel Frame 4)

As illustrated in FIGs. 1, 2, and 10, the tunnel frame 4 is formed in or near the tunnel portion 30, and includes an upper tunnel frame 41 and a tunnel side frame 42. As a backbone frame extending in the front-rear direction, the upper tunnel frame 41 is joined to an upper portion of the tunnel portion 30. The upper tunnel frame 41 is substantially formed in a U-shape that is opened downward in a cross section orthogonal to the front-rear direction, and lower end portions on both of the left and right sides are joined to upper portions of the left and right side surface portions 30a, respectively. In this way, between the upper tunnel frame 41 and the upper surface portion 30b of the tunnel portion 30, a closed cross-section 41S is formed to extend rearward from a front end of the tunnel portion 30 over an entire length in the front-rear direction.

In addition, the tunnel side frame 42 is disposed at a lower end portion on each of the left and right outer sides of the tunnel portion 30, and has a closed cross-section 42S that extends in the front-rear direction.

Here, as illustrated in FIGs. 1, 2, 6, 7, 8, and 10, a tunnel opening 2A that bulges upward is formed in a central portion in the vehicle width direction of a lower portion of the lower dash panel 21 described above. This tunnel opening 2A is joined to a front end of the tunnel portion 30 that is formed in the central portion of the floor panel 3 in the vehicle width direction (see FIG. 10). A space under the tunnel portion 30 and the power unit room PR communicate with each other in the front-rear direction via the tunnel opening 2A.

### (Side Sill 5)

As illustrated in FIGs. 1, 2, 6, 7, 8, and 10, the side sill 5 is disposed on both left and right end portions of the floor panel 3 in the vehicle width direction, and has side sill closed cross-sections 51S, 521S, 522S extending in the front-rear direction of the vehicle.

This side sill 5 includes: an inner side sill 51 over an entire length of the side sill 5 in the front-rear direction; and an outer side sill 52 and a side sill rein 53, each of which is arranged on the outer side of the inner side sill 51 in the vehicle width direction.

The inner side sill 51 is formed over an entire length of the side sill 5 in the up-down direction in a hat-shaped cross section that is open outward in a vehicle body width direction. The side sill rein 53 is a plate-shaped steel panel member that is interposed between the inner side sill 51 and the outer side sill 52, and is substantially formed linearly along the up-down direction over an entire length of the side sill 5.

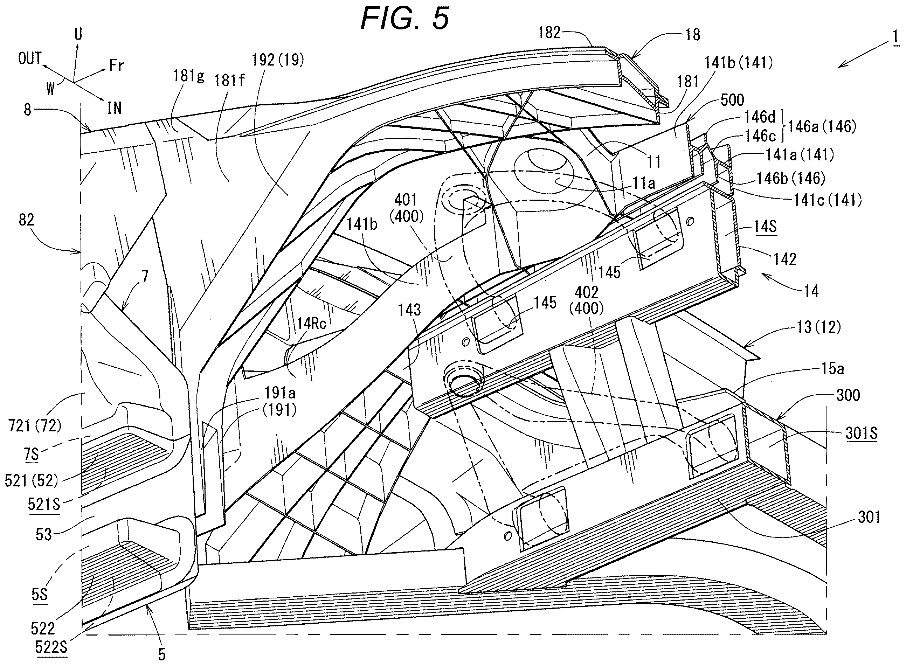

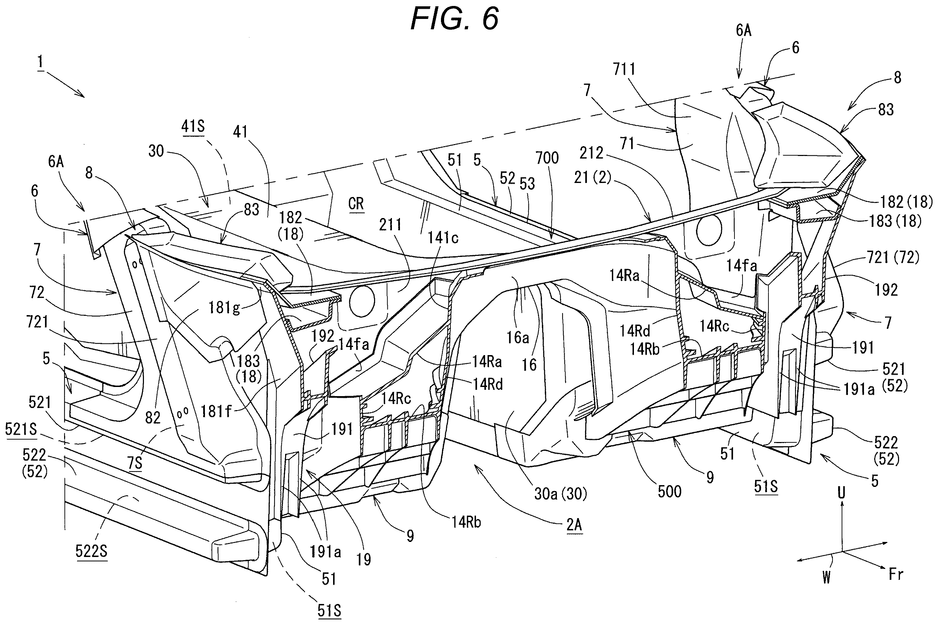

As illustrated in FIGs. 5 and 6, on the outer side of the inner side sill 51 in the vehicle width direction, the outer side sill 52 includes: an upper outer side sill 521 provided in an upper portion of the side sill 5; and a lower outer side sill 522 provided in a lower portion thereof. Each of the upper outer side sill 521 and the lower outer side sill 522 is formed to have a hat-shaped cross section that is open inward in the vehicle body width direction.

Each of these elements 51, 521, 522 of the side sill 5 is formed by pressing a metal panel member.

The inner side sill 51 has an outer end portion in the vehicle width direction that is joined to the side sill rein 53 from the inner side in the vehicle width direction, and, at a position near the inner side in the vehicle width direction of the side sill 5, forms an inner side sill closed cross-section 51S over substantially the entire length of the side sill 5 in the front-rear direction.

An inner end portion of the lower outer side sill 522 in the vehicle width direction is joined to a lower portion of the side sill rein 53.

Thus, between the lower outer side sill 522 and the side sill rein 53, a lower side sill closed cross-section 522S is formed over substantially the entire length in the front-rear direction at a position near the outer side in the vehicle width direction of the lower portion of the side sill 5.

An inner end portion of the upper outer side sill 521 in the vehicle width direction is joined to an upper portion of the side sill rein 53.

Thus, between the upper outer side sill 521 and the side sill rein 53, an upper side sill closed cross-section 521S is formed over substantially the entire length in the front-rear direction at a position near the outer side in the vehicle width direction of the upper portion of the side sill 5.

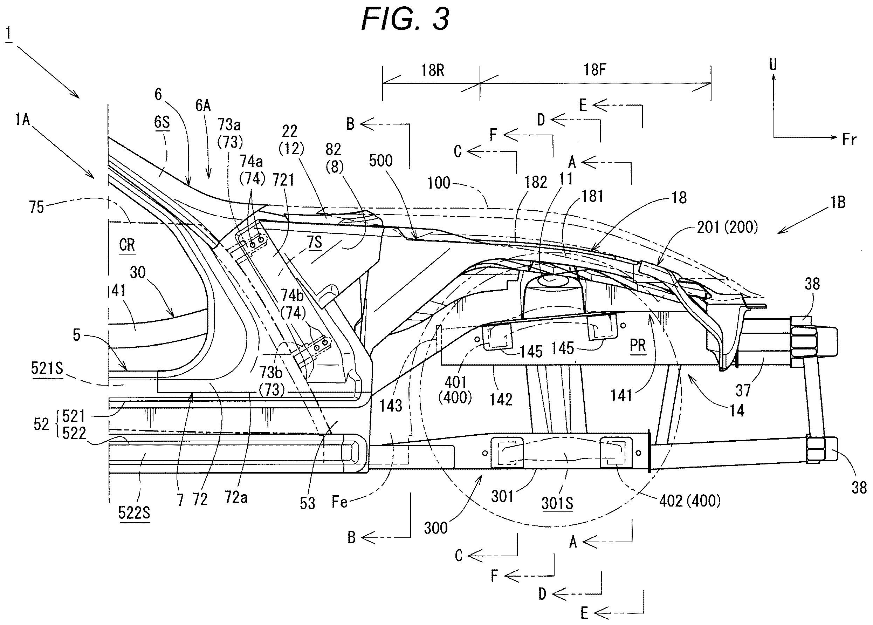

As illustrated in FIGs. 3, 6, and 10, the front portion of the side sill 5 extends forward from a front pillar base portion 6A described below and the lower dash panel 21. The inner side sill closed cross-section 51S, the upper side sill closed cross-section 521S, and the lower side sill closed cross-section 522S described above as the side sill closed cross-sections 51S, 521S, 522S are formed over the substantially entire length in the front-rear direction to the substantially front end portion of the side sill 5. Here, each of the side sill closed cross-sections 51S, 521S, 522S has a front surface portion in the front end portion of the side sill 5 and is closed in the front-rear direction.

### (Front Pillar 6)

As illustrated in FIGs. 1, 2, and 3, the front pillar 6 extends along a front-down direction by joining an outer front pillar (not illustrated) and an inner front pillar (not illustrated) at a side edge that corresponds to each of left and right sides of an opening for disposing a front windshield (not illustrated) that is inclined in the front-down direction. The front pillars 6 are vehicle body reinforcing members, each of which has a front pillar closed cross-section 6S inclined in the front-down direction, and which support the front windshield from both of the left and right sides via fillers.

### (Hinge Pillar 7)

As illustrated in FIGs. 1, 2, 3, and 6, on each of the left and right sides of the lower dash panel 21, the hinge pillar 7 extends in the up-down direction between a base portion of the front pillar 6 (the front pillar base portion 6A) and the side sill 5.

As illustrated in FIGs. 3 and 6, by joining an inner hinge pillar 71 and an outer hinge pillar 72, the hinge pillar 7 has a hinge pillar closed cross-section 7S that extends in the up-down direction therebetween.

A lower end portion of the outer hinge pillar 72 is joined to the outer side sill 52 (a shoulder portion of the upper outer side sill 521). This outer hinge pillar 72 includes an outer body portion 721, which is substantially formed in a hat shape and is opened inward in the vehicle width direction, over an entire length in the up-down direction.

As illustrated in FIG. 3, the outer body portion 721 is arranged to be displaced downward from an upper end portion thereof that is joined to the front pillar base portion 6A and is inclined downward to the front in a vehicle side view, and a lower end portion (72a) thereof is joined to the front end portion of the side sill 5.

That is, the front end portion of the side sill 5 described above is located in front of the front pillar base portion 6A, and a front end portion of the hinge pillar 7 that is inclined in the front-down direction from the front pillar base portion 6A is joined thereto from above.

As illustrated in FIGs. 1, 2, and 6, the inner hinge pillar 71 includes an inner body portion 711 and an inner side panel (not denoted by a reference sign) that extends forward from an outer end portion of the inner body portion 711 in the vehicle body width direction. A lower end portion of the inner hinge pillar 71 is joined to a shoulder portion of the inner side sill 51.

The inner body portion 711 is substantially formed in a hat shape that is opened outward in the vehicle width direction and along the substantially vertical direction.

In such an inner hinge pillar 71, the inner body portion 711 and an inner side panel are formed as a unit or integrally with each other and are formed over an entire length of the hinge pillar 7 in the up-down direction.

As illustrated in FIGs. 3, 6, 7, and 8, the hinge pillar closed cross-section 7S is provided between the inner hinge pillar 71 and the outer hinge pillar 72 as described above, and is at least provided in a portion corresponding to the outer body portion 721 and the inner body portion 711 in the vehicle side view.

Here, in a front portion of the side surface of the outer body portion 721, hinge attachment portions 74 (74a, 74b) are provided on upper and lower sides for attachment of door hinges 73 (73a, 73b) (see FIG. 3).

Here, in the outer hinge pillar 72, as illustrated in FIG. 3, the upper and lower hinge attachment portions 74 (74a, 74b) are arranged such that the lower hinge attachment portion 74b is located in front of the upper hinge attachment portion 74a in a manner to correspond to the outer body portion 721 that is arranged to be inclined downward to the front in the vehicle side view as described above.

Then, in the upper and lower hinge attachment portions 74 (74a, 74b), for example, a swing door 75 as a flipping side door, in which a door rear portion is displaced outward and upward when the door is opened like a scissors door or a butterfly door, is supported via the upper and lower door hinges 73 (73a, 73b) (see FIG. 3).

### (Cowl Side Rein 8)

As illustrated in FIGs. 1, 2, 3, 5, 7, 8, and 10, the cowl side rein 8 is located on the outer side of an outer end of the lower dash panel 21 in the vehicle width direction, and is provided near the front pillar base portion 6A located on an upper end of the hinge pillar 7.

The cowl side rein 8 extends forward from an upper front side of the outer body portion 721 of the hinge pillar 7 in a manner to connect a rear end portion of the apron frame 18 described below in a bracing manner (see FIGs. 1, 2, and 6). The cowl side rein 8 is formed to have a substantially closed cross-sectional shape that extends in the front-rear direction by an inner side panel forming a vehicle width inner wall, an outer panel 82 forming a vehicle width outer wall and a lower wall (a bottom surface), and an upper panel 83 forming an upper wall.

### (Torque Box 9)

As illustrated in FIGs. 2, 6, 7, 8, 10, and 11 (b), the torque box 9 is a pair of left and right vehicle body reinforcing members, each of which is joined to a front surface of the respective slant portion 214 of the lower dash panel 21 and has a closed cross-section 9S extending in the vehicle width direction with a front surface of the slant portion 214, and couples the front end portion of the tunnel side frame 42 and the front end portion of the side sill 5 in the vehicle width direction on each of the left and right sides.

### (Dash Lower Rein 10)

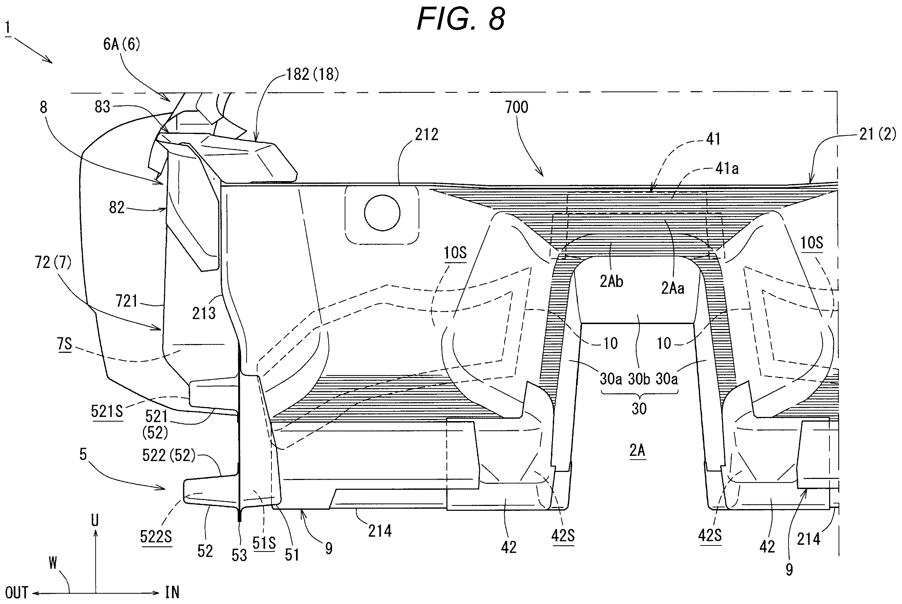

As illustrated in FIGs. 8 and 11(a), the dash lower rein 10 is joined to an inner side surface of the cabin CR of the dash panel 2 and forms a closed cross-section 10S with the inner side surface of the cabin CR.

The closed cross-section 10S is configured to continue downward to the outer side in the vehicle width direction from the rear end portion of the front frame 14 and extend to the hinge pillar 7 and the inner side sill 51 directly below the hinge pillar 7 in a manner to overlap a rear end of the front frame rear portion 14R of a box-shaped hollow body in the vehicle rear view and to overlap the inner side sill 51 in the vehicle plan view (see the drawings).

As illustrated in FIG. 11(a), an outer edge flange portion 10a in the vehicle width direction of the dash lower rein 10 is joined to a front portion of the inner side sill 51 and the inner hinge pillar 71 from the inner side in the vehicle width direction via the vehicle width outer end flange portion 213 of the dash panel 2. In this way, the closed cross-section 10S of the dash lower rein 10 is coupled to the hinge pillar closed cross-section 7S and the inner side sill closed cross-section 51S in the vehicle width direction.

Next, the vehicle body front structure 1B will be described.

As illustrated in FIGs. 1 and 2, the vehicle body front structure 1B includes: a bonnet 100 covering the power unit room PR, which is provided in front of the dash panel 2, from above; a front fender Fe that covers it from the side; a front bumper face (not illustrated) that covers it from the front; a shroud member 200; a suspension housing 11; a front subframe 300 and a front suspension 400; a cowl structure 12; the front frame 14; and the apron frame 18.

### (Shroud Member 200)

Further, as illustrated in FIG. 1, in an upper end portion near the rear side of the front bumper face (not illustrated) that covers the power unit room PR from the front, the shroud member 200 that supports heat exchangers such as a radiator and an intercooler (not illustrated) is disposed along the vehicle width direction.

As illustrated in FIGs. 1 and 2, a shroud upper member 201 is provided in an upper side portion of the shroud member 200. A latch accommodation portion 203 for accommodating a latch 202 as a bonnet lock is formed in a concave shape in a front portion of the shroud upper member 201 at a center in the vehicle direction.

The latch 202 is provided so as to be engageable with a substantially U-shaped striker (not illustrated) provided to the bonnet 100. Here, a reference sign 204 in FIGs. 1 and 2 denotes a latch support rein that extends linearly from each of left and right coupling front end portions toward a central portion in the vehicle width direction, and the latch 202 is supported by these pair of the left and right latch support reins 204 and the shroud upper member 201 in cooperation.

### (Suspension Housing 11)

The suspension housing 11 is disposed at a position separated forward from the lower dash panel 21 described above on each of the left and right sides of the power unit room PR, and as illustrated in FIGs. 3 and 5, the front suspension 400 is accommodated below.

As illustrated in FIGs. 2 and 5, a damper top portion 11a, to which a suspension damper (not illustrated) provided in the front suspension 400 is attached from below, is provided in a top portion of the suspension housing 11.

### (Front Subframe 300 and Front Suspension 400)

As illustrated in FIGs. 3 and 5, the front subframe 300 for supporting an upper arm 401 and a lower arm 402 of the front suspension 400 that suspends a front wheel (see FIG. 1) is provided in a lower portion and below each of the left and right paired front frames 14.

The front suspension 400 is disposed on each of the left and right outer sides of the front subframe 300 in a manner to correspond to the left and right front wheels (not illustrated). The front suspension 400 in the present embodiment employs a double wishbone suspension and includes the upper arm 401 provided on the upper side and the lower arm 402 provided on the lower side.

As illustrated in FIGs. 3 and 5, the front subframe 300 is formed in a substantially well curb shape in a plan view by a pair of left and right upper front-rear members extending in the front-rear direction (corresponding to sub frame upper side frame portions); a pair of left and right lower front-rear members 301 extending in the front-rear direction at positions away from the upper front-rear members above; a front cross member (not illustrated) that couples front end portions of the left and right lower front-rear members 301 in the vehicle width direction.

The pair of left and right upper front-rear members and the pair of left and right lower front-rear members 301, and the front cross member, which constitute the front subframe 300, constitute hollow closed cross-sections 14S, 301S extending in an extending direction thereof by joining end portions of the plural steel sheets.

The upper front-rear member of the front subframe 300 includes an upper arm attachment portion 145 as a suspension support frame on an outer side surface portion, and an inner end portion of the upper arm 401 in the vehicle width direction is attached to the upper arm attachment portion 145 in a manner to be rotatable about an axis extending in the vehicle body front-rear direction.

Similarly, the lower front-rear member 301 of the front subframe 300 has an attachment portion as a suspension support frame for the lower arm 402 on an outer side surface portion, and an inner end portion of the lower arm 402 in the vehicle width direction is attached to the attachment portion in a manner to be rotatable about an axis extending in the vehicle body front-rear direction (see FIG. 3).

### (Cowl Structure 12)

As illustrated in FIGs. 1, 5, and 7, the cowl structure 12 includes the above-described upper dash panel 22, a cowl panel 13 (not illustrated), and a cowl grill (not illustrated).

More specifically, the cowl structure 12 is formed such that the upper dash panel 22 and the cowl panel 13 cooperate to have an open cross-sectional shape (a tub shape) in which only a central portion in the vehicle width direction has a concave space 13S, an orthogonal cross section of which in the vehicle width direction is opened upward over an entire length thereof. In such a cowl structure 12, both end portions of the concave space 13S in the vehicle width direction are opened outward in the vehicle width direction.

In this way, as illustrated in FIG. 1, the cowl structure 12 allows water dripped from the front windshield to the concave space 13S, which is provided only in the central portion in the vehicle width direction, via the cowl grill to flow to the outer side in the vehicle width direction along a lower surface portion of the cowl panel and to be discharged to the outside from an outer end of the concave space 13S in the vehicle width direction.

### (Overall Front Frame 14)

As illustrated in FIGs. 1, 2, and 10, the front frame (also referred to as a front side frame) 14 is a vehicle body rigid member that extends in the front-rear direction from a front surface of the dash panel 2 on each of the left and right sides of the power unit room PR in the front space on the front side of the dash panel 2.

In addition, as illustrated in FIGs. 1, 3, 4, and 10, a crash can 37 as a shock absorbing member is attached to a front end portion of the front frame 14 via a set plate 35 and a bracket 36, and a bumper beam 38 that has a closed cross-section extending in the vehicle width direction is coupled between front end portions of a pair of the left and right crash cans 37.

As illustrated in FIGs. 3, 4, and 5, the front frame 14 includes: a front frame corresponding portion 141 that corresponds to a part of the front frame 14 in a cast body 500 described below; and a closed cross-sectional frame portion 142 that is made of a steel sheet.

As illustrated in FIG. 4, the front frame corresponding portion 141 is integrally formed as a part of the cast body 500 by a front frame corresponding rear portion 141R that extends from the front surface of the dash panel 2 to the front of the vehicle and a front frame corresponding front portion 141F that further extends forward from a front side position of the front frame rear portion 14R.

The front frame corresponding rear portion 141R corresponds to a rear portion (a base portion) 14R of the front frame 14 that extends from the front surface of the dash panel 2 to the front side of the vehicle, and is formed with a vertical wall-shaped rib 143 in a lower portion of a front end portion thereof. The rib 143 hangs from an upper portion of the front end portion in a manner to be able to abut a rear end portion of a front frame front portion 14F from the front. Details of the front frame corresponding rear portion 141R will be described below.

### (Closed Cross-Sectional Frame Portion 142)

As illustrated in FIGs. 3, 4, 5, and 10, the closed cross-sectional frame portion 142 extends linearly in the front-rear direction at a position immediately below the front frame corresponding front portion 141F, has a rear end portion that abuts against the rib 143 in the lower portion of the front end portion of the front frame corresponding rear portion 141R, and is attached to the front frame corresponding front portion 141F via fastening members (not illustrated) in two front and rear attachment portions 144.

In this way, both of the front frame corresponding front portion 141F and the closed cross-sectional frame portion 142 are arranged in parallel on the upper and lower sides along the front-rear direction. Then, the closed cross-sectional frame portion 142 that has a shock absorbing function of a frontal collision load is supported by the front frame corresponding front portion 141F from above.

That is, the front frame corresponding front portion 141F as the cast body 500 and the closed cross-sectional frame portion 142 made of the steel sheet cooperate with each other to constitute the front frame front portion 14F that further extends forward from a front end position of the front frame corresponding rear portion 141R as the front frame rear portion 14R.

In addition, the closed cross-sectional frame portion 142 is disposed in series with the front frame corresponding rear portion 141R in the front-rear direction by abutting the rear end portion thereof against the rib 143 in the front end portion of the front frame corresponding rear portion 141R (the front frame rear portion 14R) (see the drawings).

Furthermore, as illustrated in FIGs. 4 and 5, the closed cross-sectional frame portion 142 is made of the steel sheets and has a closed cross-section 14S having a hollow shape (a so-called monaka shape, i.e. a sandwich structure with a core cavity) in which a cross-sectional shape orthogonal to the front-rear direction formed by joining end portions of the plural steel sheets is a rectangular shape longer in the up-down direction than the vehicle width direction.

As illustrated in FIG. 3, the closed cross-sectional frame portion 142 serves not only as a part of the front frame 14 but also as an upper arm support frame (the upper front-rear member as a sub frame upper side frame portion) provided in the front subframe 300.

More specifically, as illustrated in FIG. 3, the upper arm attachment portion 145 is provided in a portion of the closed cross-sectional frame portion 142 that corresponds to the upper arm 401 of the front suspension 400 in the front-rear direction of the outer side surface portion. As illustrated in FIG. 4, the closed cross-sectional frame portion 142 has, in the front-rear direction: an upper arm support region UHZ corresponding to a portion from a rear end portion of the closed cross-sectional frame portion 142 to the upper arm attachment portion 145; and an extension region EZ extending to the front of a front end of the front frame corresponding front portion 141F from a front end of the upper arm support region UHZ.

As described above, with provision of the extension region EZ, a front end portion 14a of the closed cross-sectional frame portion 142 extends forward from a front end portion 14Re of the front frame corresponding front portion 141F. Thus, the front end portion 14a of the closed cross-sectional frame portion 142 is located in the front end portion of the front frame 14.

That is, the crash can 37 is attached to the front end portion 14a of the closed cross-sectional frame portion 142, which is located in the front end portion of the front frame 14, via the set plate 35 and the bracket 36. Then, a center axis AXa of the closed cross-sectional frame portion 142 along the front-rear direction is located on the same straight line as a center axis AXb of the crash can 37 along the front-rear direction.

### (Front Frame Corresponding Front Portion 141F)

As illustrated in FIG. 4, the front frame corresponding front portion 141F continues along the front-rear direction from a front end upper portion of the front frame corresponding rear portion 141R to a rear side near the front end portion 14a of the closed cross-sectional frame portion 142, and a rear portion thereof is formed to smoothly ascend to the front from the front end upper portion of the front frame corresponding rear portion 141R.

As illustrated in FIGs. 4 and 5, the front frame corresponding front portion 141F has an H-shaped cross section that is orthogonal to the front-rear direction by a base plate portion 141a along the vehicle width direction, an outer wall portion 141b that protrudes in the up-down direction from an outer end of the base plate portion 141a in the vehicle width direction, and an inner wall portion 141c that protrudes in the up-down direction from an inner end of the base plate portion 141a in the vehicle width direction. In this way, rigidity is increased against a pole-shaped colliding object that collides with a central portion of a vehicle body front end portion in the vehicle width direction.

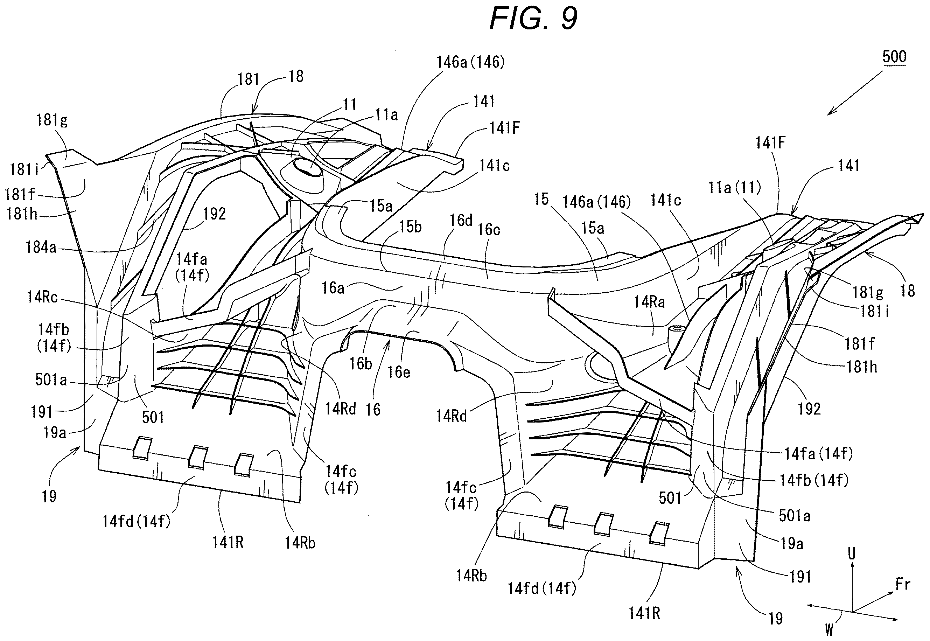

As illustrated in FIGs. 5 and 9, the front frame corresponding front portion 141F includes a front-rear direction extending rib 146 that protrudes in the up-down direction from the base plate portion 141a. Here, the front frame corresponding front portion 141F, that is, each of the base plate portion 141a, the inner wall portion 141c and outer wall portion 141b protruding in the up-down direction from the base plate portion 141a, and the front-rear direction extending rib 146 is formed by an upper mold and a lower mold as described below as part of the cast body 500.

As illustrated in FIG. 5, the front-rear direction extending rib 146 includes a front-rear direction extending upper rib 146a that protrudes in the up direction and a front-rear direction extending lower rib 146b that protrudes in the down direction. The front-rear direction extending upper rib 146a protrudes upward from a central portion of the base plate portion 141a in the vehicle width direction.

More specifically, in a cross section orthogonal to the front-rear direction, the front-rear direction extending upper rib 146a is integrally formed by: a protruding base portion 146c which has a substantially triangular cross section and entirety of which including a lower surface of the central portion of the base plate portion 141a in the vehicle width direction is gradually tapered upward; and a tip portion 146d that protrudes upward in a straight line from a tip portion of the base portion 146c. A pair of the front-rear direction extending lower ribs 146b is provided that protrudes downward from both outer sides of the central portion of the base plate portion 141a in the vehicle width direction.

Rigidity of the front frame corresponding front portion 141F in the up-down direction against the frontal collision load is increased by these upper and lower front-rear direction extending ribs 146 (the front-rear direction extending upper rib 146a and the front-rear direction extending lower rib 146b). In addition, while the front-rear direction extending upper rib 146a has the shape in which the entirety thereof including a lower surface of the central portion of the base plate portion 141a in the vehicle width direction protrudes upward, the front-rear direction extending lower ribs 146b are provided as the pair on both of the outer sides of the central portion of the base plate portion 141a in the vehicle width direction. In this way, the front-rear direction extending ribs 146 can be provided on upper and lower sides of the base plate portion 141a in a well-balanced manner in a manner to prevent a center of gravity of the front frame corresponding front portion 141F from being shifted with respect to a center axis AXc (see FIG. 4) as much as possible.

As illustrated in FIG. 4, the front frame corresponding front portion 141F is disposed at a position where the center axis AXc is offset upward from the center axis AXb of the crash can 37 along the front-rear direction (the center axis AXa of the closed cross-sectional frame portion 142 along the front-rear direction).

In upper and lower parallel arrangement portions of the front frame corresponding front portion 141F and the closed cross-sectional frame portion 142, the front frame corresponding front portion 141F is formed such that a vertical width thereof including the front-rear direction extending rib 146 is gradually reduced to the front in the up-down direction, and the closed cross-sectional frame portion 142 is formed such that a vertical width is gradually increased to the front.

Accordingly, the front frame front portion 14F is configured that the vertical width of the closed cross-sectional frame portion 142 is gradually increased to the front in comparison with the vertical width of the front frame corresponding front portion 141F.

More specifically, the closed cross-sectional frame portion 142 is formed such that, while the vertical width is substantially constant from the front end portion 14a in the front-rear direction to a front end of the upper arm attachment portion 145, the vertical width is gradually reduced to the rear at a position behind the front end of the upper arm attachment portion 145.

Meanwhile, the front frame corresponding front portion 141F is formed in the tapered shape such that the vertical width is gradually reduced to the front until reaching the front end portion 14Re of the front frame corresponding front portion 141F, and is formed to be smoothly continuous with an upper surface portion of the closed cross-sectional frame portion 142 in the front-rear direction. Here, the upper surface portion of the closed cross-sectional frame portion 142 is set at substantially the same height as an upper surface portion of the crash can 37.

As illustrated in FIGs. 3 and 5, in the front-rear direction of the front frame corresponding front portion 141F, an inner end of the suspension housing 11 in the vehicle width direction is integrally joined to a portion of the closed cross-sectional frame portion 142 that coincides with the upper arm attachment portion 145. In this way, the front frame 14 supports the suspension housing 11 from the inside of the vehicle.

### (Front Frame Rear Portion 14R)

As illustrated in FIG. 9, the front frame corresponding rear portion 141R is cast into a rearward-opened opened box shape that is opened rearward as a part of the cast body 500.

More specifically, as illustrated in FIGs. 6, 7, and 9, the front frame rear portion 14R includes an upper wall portion 14Ra, a lower wall portion 14Rb separated downward from the upper wall portion 14Ra, an outer wall portion 14Rc coupling, in the up-down direction, outer end portions of the upper wall portion 14Ra and the lower wall portion 14Rb in the vehicle width direction, and an inner wall portion 14Rd coupling, in the up-down direction, inner end portions of the upper wall portion 14Ra and the lower wall portion 14Rb in the vehicle width direction.

Furthermore, the front frame rear portion 14R is cast in a rearward enlarged shape in which an inner diameter and an outer diameter thereof in the up-down direction are gradually increased toward a rear end portion (14f). That is, the front frame rear portion 14R is formed in a trumpet shape that is opened rearward while being gradually expanded rearward.

More specifically, as illustrated in FIGs. 4 and 9, the upper wall portion 14Ra and the lower wall portion 14Rb extend rearward in a manner to branch in the up-down direction to the rear from the rear end portion of the base plate portion 141a of the front frame front portion 14F. Among these upper wall portion 14Ra and lower wall portion 14Rb, the upper wall portion 14Ra extends substantially horizontally from the rear end portion (the branched portion) of the base plate portion 141a of the front frame front portion 14F to the rear end portion. A width of the lower wall portion 14Rb is increased rearward from the rear end portion (the branched portion) of the base plate portion 141a of the front frame front portion 14F. A width of the outer wall portion 14Rc (a rear enlarged outer side portion) is increased rearward to the vehicle width outer side from the rear end portion (the branched portion) of the outer wall portion 141b of the front frame front portion 14F. A width of the inner wall portion 14Rd is increased rearward to the vehicle width inner side from the rear end portion (the branched portion) of the inner wall portion 141d of the front frame front portion 14F.

### (Rear End Flange Portion 14f of Front Frame Rear Portion 14R)

As illustrated in FIGs. 7 and 9, a rear end portion of the front frame rear portion 14R is formed with, as the rear end flange portion 14f along a peripheral edge of a rear opening, an upper wall rear end flange portion 14fa, an outer wall rear end flange portion 14fb, an inner wall rear end flange portion 14fc, and a lower wall rear end flange portion 14fd.

The upper wall rear end flange portion 14fa is formed to protrude upward from a rear end of the upper wall portion 14Ra of the front frame rear portion 14R along the rear end. The outer wall rear end flange portion 14fb is formed to protrude outward from a rear end of the outer wall portion 14Rc of the front frame rear portion 14R toward the vehicle width outer side along the rear end. The inner wall rear end flange portion 14fc is formed to protrude from a rear end of the inner wall portion 14Rd of the front frame rear portion 14R to the vehicle width inner side along the rear end. The lower wall rear end flange portion 14fd is formed to protrude downward from a rear end of the lower wall portion 14Rb of the front frame rear portion 14R along the rear end.

As illustrated in FIGs. 2, 6, 7, and 11(a), the above-described rear end flange portion 14f of the front frame corresponding rear portion 141R is mainly joined to the front surface of the dash panel 2 of a cabin front surface portion 700 that includes the dash panel 2 and will be described below.

### (Bridge Portion 16)

Next, the inner wall portion 14Rd of the front frame corresponding rear portion 141R will be described in detail. As illustrated in FIGs. 2, 6, 7, 9, and 10, the inner wall portion 14Rd is formed in a vertical wall shape to face the power unit room PR on a vehicle width central portion side. This inner wall portion 14Rd is formed such that a vertical width thereof is increased to the rear, and is formed to be bent in an arch shape toward the center side in the vehicle width direction in conjunction with the rearward displacement to the vehicle width inner side as described above.

A bridge portion 16 is formed between the left and right front frame corresponding rear portions 141R in the vehicle width direction such that the rear portion of the inner wall portion 14Rd extends across the tunnel opening 2A of the dash panel 2.

As illustrated in FIGs. 2, 6, 7, and 10, as described above, the bridge portion 16 bridges the rear portions of the inner wall portions 14Rd of the left and right front frame corresponding portions 141 in the vehicle width direction along upper side portions 2Aa, 2Ab (see FIG. 8) of the tunnel opening 2A of the dash panel 2. The bridge portion 16 is formed in the arch shape in vehicle front view and the plan view in a manner to protrude upward to a center thereof in the vehicle width direction and protrude rearward to the center thereof in the vehicle width direction, and is joined from the front side and the lower side to the upper side portions 2Aa, 2Ab of the tunnel opening 2A of the dash panel 2.

More specifically, as illustrated in FIGs. 7, 9, and 11(c), the bridge portion 16 is integrally formed along the vehicle width direction by a front wall portion 16a along the up-down direction, a lower wall portion 16b extending rearward from a lower end of the front wall portion 16a, an inclined surface 16c extending upward and forward from an upper end of the front wall portion 16a, a forward extending portion 16d extending horizontally and forward from an upper end of the inclined surface 16c, and a rear end flange portion 16e extending rearward from a rear end of the lower wall portion 16b.

As illustrated in FIG. 11(c), in the bridge portion 16, since the inclined surface 16c is coupled to the front surface 2Aa of the upper side portion of the tunnel opening in the dash panel 2, and the rear end flange portion 16e is coupled to the lower surface 2Ab of the upper side portion of the tunnel opening of the dash panel 2, as illustrated in FIGs. 6, 7, and 11(c), a closed cross-section 16S that extends in the vehicle width direction is formed between it and the front surface 2Aa of the upper side portion of the tunnel opening in the dash panel 2.

As illustrated in FIG. 9, in the inclined surface 16c of the bridge portion 16 along the vehicle width direction, both outer end portions thereof in the vehicle width direction smoothly continue along the vehicle width direction and the front-rear direction with an inward bent protruding piece 15 of the front frame corresponding rear portion 141R on both of the sides in the vehicle width direction.

Furthermore, in the forward extending portion 16d of the bridge portion 16 along the vehicle width direction, both outer end portions thereof in the vehicle width direction smoothly continue along the vehicle width direction and the front-rear direction with inward extending portions 15a of the front frame corresponding rear portion 141R on both of the sides in the vehicle width direction.

Here, as described above, the front end portion 41a of the upper tunnel frame 41 is joined to the upper side portions 2Aa, 2Ab of the tunnel opening of the dash panel 2 from the cabin inner side (see FIGs. 8 and 11(c)). That is, the front end portion 41a of the upper tunnel frame 41 and the bridge portion 16 substantially coincide with each other in the front view. In this way, the closed cross-section 16S of the bridge portion 16 and the closed cross-section 41S of the upper tunnel frame 41 extend continuously in the front-rear direction via the dash panel 2.

As illustrated in FIGs. 1, 2, and 9, a lower surface portion 131 of the tub-shaped cowl structure 12 is joined from above to the forward extending portion 16d of the bridge portion 16 and the inward extending portion 15a of the inner wall portion 14Rd of the left and right front frame corresponding rear portion 141R. In this way, the cowl panel 13 is supported by the forward extending portion 16d and the inward extending portions 15a on the left and right sides of the forward extending portion 16d.

### (Apron Frame 18)

As illustrated in FIGs. 1, 5, 6, and 10, the apron frame 18 is disposed along the front-rear direction at a position above and the outer side in the vehicle width direction of each of the paired left and right front frames 14 extending in the front-rear direction. In a manner to be substantially linearly with the cowl side rein 8 in the vehicle front-rear direction, the apron frame 18 extends in the front direction from the cowl side rein 8 and passes the vehicle outer side of the suspension housing 11 until the front end portion thereof reaches the shroud member 200.

The apron frame 18 includes an apron frame body portion 181, an upper surface plate member 182 provided above the apron frame body portion 181, and a lower member 183 provided below the apron frame body portion 181. In other words, as illustrated in FIG. 3, the apron frame 18 is divided into an apron rear region 18R extending forward from the cowl side rein 8 and an apron front region 18F extending further forward from a front end of the apron rear region 18R.

Each of the apron frame body portion 181 and the upper surface plate member 182 is continuously provided over an entire length of the apron frame 18 including the apron rear region 18R and the apron front region 18F. Meanwhile, the lower member 183 is provided only in the apron rear region 18R.

As illustrated in FIG. 9, the outer wall portion in the apron rear region 18R of the apron frame body portion 181 forms an outer inclined protruding piece portion 181f that gradually protrudes outward in the vehicle width direction as extending upward and rearward from a lower edge side thereof while inclined outward in the vehicle width direction until reaching a rear end portion.

As illustrated in FIG. 9, in an upper end rear portion of the outer inclined protruding piece portion 181f, an upper end flange portion 181g is formed to protrude upward and to the vehicle width outer side. A rear end upper portion 181h of the outer inclined protruding piece portion 181f and a rear end portion 181i of the upper end flange portion 181g are joined to the cowl side rein 8 provided in the vehicle body front surface portion as will be described below.

### (Apron Support Frame 19)

As illustrated in FIGs. 5, 9, and 10, an apron support frame 19 is a frame that supports the apron frame 18 at a position immediately below a rear region of the apron frame 18, and is formed as an outer bracing rein that couples the apron frame 18 and the cabin front surface portion 700 in the bracing manner on the vehicle width outer side of the cowl side rein 8 as an inner bracing rein.

More specifically, the apron support frame 19 includes: a vehicle body attachment portion 191 along the up-down direction; and an outer bracing rein portion 192 that couples the vehicle body attachment portion 191 and the apron frame 18 in a bracing manner, and is integrally formed as a part of the cast body 500.

In a rear end portion of a lower portion of the vehicle body attachment portion 191, a rear end flange portion 19a is formed to be coupled to the cabin front surface portion 700 (see FIG. 9). The rear end flange portion 19a is formed in the entire rear end portion of the lower portion of the vehicle body attachment portion 191.

A rear lower end portion of the outer bracing rein portion 192 is integrally coupled to an upper portion of the vehicle body attachment portion 191 from the front side. On each side of the vehicle body attachment portion 191 in the vehicle width direction, a rib 191c is continuously formed in a manner to protrude from a front surface thereof and extend along the up-down direction from the portion coupled to the outer bracing rein portion 192 to a lower end thereof. Since these ribs 191c along the up-down direction are disposed in parallel in the vehicle width direction on a front surface of the vehicle body attachment portion 191, load transmission performance of the vehicle body attachment portion 191 from the apron frame 18 to the cabin front surface portion 700 via the outer bracing rein portion 192 is enhanced.

The outer bracing rein portion 192 extends upward to the front, and couples an upper portion of the vehicle body attachment portion 191 and a rear end lower portion of the apron front region 18F of the apron frame 18 in the bracing manner as described above.

### (Cast Body 500)

As illustrated in FIGs. 7 and 9, the vehicle body attachment portion 191 of the apron support frame 19 and the outer wall portion 14Rc of the front frame rear portion 14R as a rearward enlarged portion described above are spaced apart from each other in the vehicle width direction. Between the vehicle body attachment portion 191 and the outer wall portion 14Rc of the front frame rear portion 14R, the above-described cast body 500 includes a coupling margin portion 501 that couples these in the vehicle width direction.

As illustrated in the drawings, also in a rear end portion of the coupling margin portion 501, a rear end flange portion 501a that is joined to the cabin front surface portion 700 is formed along the up-down direction. At the same height in the vehicle width direction, this rear end flange portion 501a is adjacent to the rear end flange portion 19a on the vehicle width inner side of the paired rear end flange portions in the upper portion of the vehicle body attachment portion 191, and is integrally formed therewith.

In short, as illustrated in FIGs. 7 and 9, the cast body 500 includes the pair of the left and right front frame corresponding portions 141, the pair of the left and right apron frame body portions 181, the pair of the left and right apron support frames 19, the pair of the left and right suspension housings 11, the pair of the left and right coupling margin portions 501, and the bridge portion 16.

The cast body 500 is made of an aluminum alloy, in which these elements are integrally molded, as a relatively large single component that is also referred to as a giga-cast having these elements (modules).

### (Joining of cast body 500 to Cabin Front Surface Portion 700)

As described above, the rear end portions of the front frame corresponding portion 141, the apron frame body portion 181, the apron support frame 19, the bridge portion 16, and the coupling margin portion 501 in the cast body 500 are respectively provided with the rear end flange portions 14f, 16c, 16d, 16e, 181h, 181i, 19a, 501a (hereinafter referred to as the rear end flange portion 14f...) as coupled portions, each of which abuts and is coupled to the cabin front surface portion 700 from the front (see FIG. 9).

Here, as illustrated in FIG. 8, the cabin front surface portion 700 is a front surface portion of the box-shaped cabin structure 1A that constitutes the cabin in a manner to face the front space of the vehicle body, and the above-described rear end flange portions 14f... of the cast body 500 provided in the front space are joined thereto from the front. The cabin front surface portion 700 mainly includes front end portions of the side sill 5, the tunnel frame 4 (the upper tunnel frame 41 and the tunnel side frame 42), the hinge pillar 7, and the front pillar 6, the dash panel 2, the torque box 9, the dash lower rein 10, and the cowl side rein 8. Among the elements of the cabin front surface portion 700, the elements other than the dash panel 2 are provided as vehicle body reinforcing members.

Then, the rear end flange portion 14f... of the cast body 500 is joined to the above-described cabin front surface portion 700 from the front such that at least some thereof coincide with the vehicle body reinforcing members provided in the cabin front surface portion 700 in the front view. In other words, as described above, the rear end flange portion 14f... of the cast body 500 is joined to the cabin front surface portion 700 from the front, and are directly or indirectly joined to the cabin frame, which constitutes a framework of the box-shaped cabin structure 1A, in the cabin front surface portion 700.

That is, the cabin frame as the vehicle body reinforcing member includes not only a direct joint cabin frame, to which the rear end flange portion 14f of the cast body 500 is directly joined, in the cabin front surface portion 700 but also an indirect joint cabin frame, which is indirectly joined via the dash panel 2 or the like.

As the direct joint cabin frame, as illustrated in FIGs. 2, 6, 7, and 11(b), an inner end in the vehicle width direction of the lower wall rear end flange portion 14fd of the lower wall portion 14Rb of the front frame corresponding portion 141 is directly joined to the front end portion of the tunnel side frame 42, and a portion thereof other than the inner end in the vehicle width direction is joined to the torque box 9.

Furthermore, as illustrated in FIGs. 3, 5, and 7, the rear end flange portions 181h, 181i of the apron frame body portion 181, that is, the rear end flange portions 181h, 181i, which are formed in the rear end portion of the above-described outer inclined protruding piece portion 181f including the upper end flange portion 181g thereof, are joined to the front end portion of the cowl side rein 8 as the bracing rein.

Moreover, as illustrated in FIGs. 2, 6, 7, 10, and 11(a), the rear end flange portion 19a of the lower portion of the apron support frame 19 is directly joined to the front end portion of the side sill 5 (more specifically, the inner side sill 51).

As the indirect joint cabin frame, as illustrated in FIGs. 2, 6, 7, and 11(a), each of the upper wall rear end flange portion 14fa of the upper wall portion 14Ra of the front frame corresponding portion 141, the inner wall rear end flange portion 14fc of the inner wall portion 14Rd, and the outer wall rear end flange portion 14fb of the outer wall portion 14Rc is joined to the front surface portion of the lower dash panel 21. Then, joint portions of these rear end flange portions 14fa, 14fc, 14fb to the front surface portion of the lower dash panel 21 are at least partially coincident with the dash lower rein 10, which is joined to the rear surface of the dash panel 2, in the vehicle front view, and are lined by the dash lower rein 10.

As illustrated in FIGs. 6, 7, and 11(c), the rear end flange portions of the bridge portion 16 (mainly the rear end flange portions 16c, 16d, 16e) are joined to the upper side portions 2Aa, 2Ab of the tunnel opening 2A of the lower dash panel 21, at least partially coincide with the front end portion 41a of the upper tunnel frame 41, which is joined to the rear surface of the dash panel 2, in the vehicle front view, and is lined by the front end portion 41a of the upper tunnel frame 41.

As illustrated in FIGs. 7 and 11(a), the rear end flange portion 501a of the coupling margin portion 501 is joined to the front surface portion of the dash panel 2, but is lined by the dash lower rein 10.

In this way, the vehicle 1 in the present embodiment can transmit the frontal collision load, which is input from the cast body 500, to the rear side of the cabin front surface portion 700. Furthermore, vehicle body flexural rigidity is secured by enhancing support strength of the apron frame 18 for the load in the up-down direction that is input from a suspension damper to the suspension housing 11, which is spaced forward from the cabin front surface portion 700, during travel of the vehicle.

### (Manufacturing Method of cast body 500)

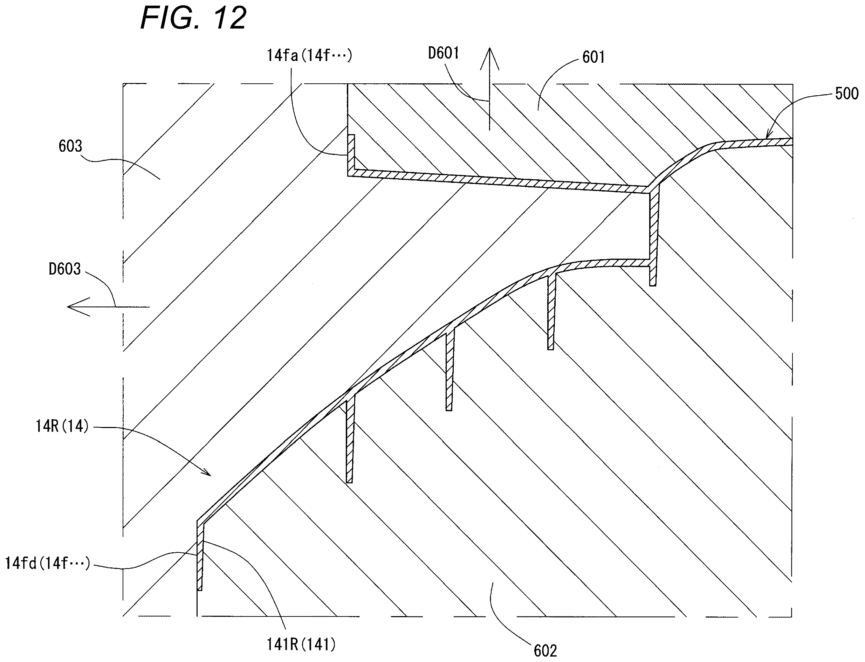

As illustrated in FIG. 12, the above-described cast body 500 is molded (cast) by using at least three molds: an upper mold 601 and a lower mold 602 that oppose each other on the upper and lower sides; and a rear punching mold 603 that slides in a different direction (D603) from a mold opening/closing direction (D601) of these upper mold 601 and lower mold 602. In this example, the lower mold 602 is a fixed mold, the upper mold 601 is a movable mold, the rear punching mold 603 is formed as a punching core, and a drive device and a drive transmission unit for the upper mold 601 and the rear punching mold 603 are not illustrated.

When the cast body 500 is cast, first, the three molds that are the lower mold 602, the upper mold 601, and the rear punching mold 603 are combined to form a cavity among these three molds for molding the cast body 500. When molten metal poured into the cavity among the three molds is solidified, the cast body 500 as a workpiece is removed.

The rear punching mold 603 in the solidified state of the molten metal is brought into a state of being embedded in the front frame corresponding rear portions 141R while at least a part thereof is inserted in the left and right front frame corresponding rear portions 141R of the cast body 500 from behind.

When the cast body 500 is removed from the mold, the upper mold 601 is slid upward with respect to the lower mold 602, and the rear punching mold 603 is slid in a different direction from the up-down direction, which is the slide direction of the upper mold 601, more specifically, in the rear direction that is orthogonal to the slide direction of the upper mold 601 in the vertical cross-sectional view. In this way, the cast body 500 is obtained.

More specifically, first, since the cast body 500 is removed by sliding the upper mold 601 upward with respect to the lower mold 602 as described above, the lower mold 602 and the upper mold 601 are formed to have an opened cross-sectional shape (an upper opened cross-sectional shape and a lower opened cross-sectional shape) in which both of the front frame corresponding portion 141 and the apron frame 18 are opened in the up-down direction. Furthermore, when the cast body 500 is cast, for example, the front frame corresponding portion 141 of the cast body 500 can be formed with the front-rear direction extending rib 146, which protrudes in the up-down direction with respect to the base plate portion 141a, along the front-rear direction.

Moreover, in regard to the rear punching mold 603, as described above, the rear punching mold 603 is slid in the rear direction, which is a different direction from the up-down direction as the slide direction of the upper mold 601, for removal, and it is thereby possible to eliminate a concave portion (a portion that becomes an undercut) that does not come out in the mold opening direction of the upper mold 601. Accordingly, as illustrated in FIG. 12, the cast body 500 can have the box shape in which the front frame corresponding rear portion 141R is gradually enlarged toward the rear end and which is opened rearward.

### (Operational Effects of Vehicle 1 in Present Embodiment)

As illustrated in FIGs. 1, 2, and 3, the vehicle body structure of the vehicle 1 in the present embodiment includes: the suspension housing 11 that is provided to be spaced apart forward from the cabin front surface portion 700 serving as the front surface of the box-shaped cabin structure 1A, in which the outer frame of the cabin CR is formed in the box shape, and that covers the front suspension 400 from above; and the pair of the left and right front frames 14 that extends in the vehicle front-rear direction on both of the left and right sides of the power unit room PR provided in front of the cabin front surface portion 700 and that supports the suspension housing 11.

The power unit room PR includes the cast body 500 that is integrally formed by including the front frame corresponding portion 141, which constitutes a part of the front frame 14, and the suspension housing 11.

As illustrated in FIGs. 3, 4, and 5, the front frame 14 includes the front frame corresponding portion 141 and the closed cross-sectional frame portion 142 that is supported by the front frame corresponding portion 141 from above, the front frame corresponding portion 141 extends along the front-rear direction, and the rear end portion thereof is joined to the vehicle body reinforcing members (the front end portion of each of the tunnel frame 4, the side sill 5, the front pillar 6, and the hinge pillar 7, the cowl side rein 8, the torque box 9, and the dash lower rein 10) provided in the cabin front surface portion 700.

Then, as illustrated in FIGs. 4 and 5, the closed cross-sectional frame portion 142 constitutes the closed cross-section 14S that extends along the front-rear direction and joins the end portions of the plural steel sheets, and includes: the upper arm support region UHZ where the upper arm attachment portion 145 for attaching the upper arm 401 of the front suspension 400 is provided; and the extension region EZ that extends to the front of the front end portion of the front frame corresponding portion 141 from the front end portion of the upper arm attachment portion 145, and the crash can 37 that absorbs the frontal collision load is coupled to the front end portion 14a of the extension region EZ.

According to the configuration, it is possible to reduce the number of the components and reduce weight of the vehicle body by employing the cast body 500 (the giga-cast body) and integrally forming the front frame corresponding portion 141 and the suspension housing 11. Meanwhile, during the frontal collision, in the front frame 14, the closed cross-sectional frame portion 142, which is made of the steel sheet, and the plastic deformation of which is easily controlled, mainly absorbs the frontal collision energy. Thus, the front frame corresponding portion 141 as the cast body 500 and the closed cross-sectional frame portion 142, which is made of the steel sheet, can cooperatively and stably absorb the frontal collision energy. Therefore, it is possible to stably absorb the frontal collision energy while reducing the number of the components.

Furthermore, as illustrated in FIG. 4, since the upper arm attachment portion 145 is provided in the upper arm support region UHZ, which is provided in the closed cross-sectional frame portion 142 serving as a part of the front frame 14, compared to the conventional case where the front frame is provided above and independently of (spaced apart from) the sub-frame upper side portion, the upper arm 401 of the front suspension 400 can be provided above and spaced apart from the lower arm 402 without being bulky in the up-down direction.

That is, since a distance in the up-down direction between the upper arm 401 and the lower arm 402 can reliably be secured, a height of the bonnet can be suppressed to be low while the rigidity of the front suspension 400 is improved. For example, such design that enhances aerodynamic performance of a vehicle body front portion as in sports cars is possible.

Furthermore, as illustrated in FIG. 3, in this example, upon attachment of the upper arm 401 and the lower arm 402 provided in the front suspension 400 to the vehicle body, while the lower arm 402 is attached to the lower front-rear member 301 made of the steel sheet, the upper arm 401 is not attached to the front frame corresponding portion 141 constituting the cast body 500, for example, but attached to the upper arm support region UHZ of the closed cross-sectional frame portion 142 made of the steel sheet.

As a result, since the upper arm 401 and the lower arm 402 can be attached to the frame structures made of the same material, suspension performance is not hindered as in a case of the attachment to the frame structures made of the mutually different materials.

As illustrated in FIG. 4, while the width in the up-down direction of the closed cross-sectional frame portion 142 is set to be gradually reduced to the rear, the width in the up-down direction of the front frame corresponding portion 141 is set to be gradually reduced to the front.

According to the configuration, in the front frame 14 including the front frame corresponding portion 141 as the cast body 500 and the closed cross-sectional frame portion 142, which is made of the steel sheet, it is possible to take advantage of the frontal collision load absorbing performance of the closed cross-sectional frame portion 142, the width of which in the up-down direction is gradually increased to the front, and to secure a support force of the closed cross-sectional frame portion 142 by the front frame corresponding portion 141, the width of which in the up-down direction is gradually increased to the rear.

As illustrated in FIG. 4, while the closed cross-sectional frame portion 142 is arranged such that the center axis AXa thereof along the front-rear direction is located on the same straight line as the center axis AXb of the crash can 37 along the front-rear direction, the front frame corresponding portion 141 is arranged such that the center axis AXc thereof along the front-rear direction is displaced upward from the center axis AXb of the crash can 37 along the front-rear direction until reaching the same height as the upper surface portion of the crash can 37 or higher, and the front frame corresponding portion 141 is formed such that the width thereof in the up-down direction is gradually increased to the rear from the front end portion 14a.

According to the configuration, the crash can 37 is gradually crushed in the front-rear direction from the front end portion thereof during the front collision without being hindered by the front frame corresponding portion 141, which is disposed directly above the closed cross-sectional frame portion 142, and thus it is possible to secure a crash margin of the crash can 37.

Thus, also in the configuration in which the front frame 14 includes the front frame corresponding portion 141 as the cast body 500, it is possible to secure the collision absorption performance of not only the closed cross-sectional frame portion 142 but also the crash can 37.

More specifically, according to the configuration, since the front frame corresponding portion 141 is provided in the rear portion from an intermediate portion of the front frame 14 in the front-rear direction, it is possible to suppress a rapid change of the rigidity of the front frame 14 in the intermediate portion thereof in the front-rear direction, that is, a rapid change in the collision energy absorbing performance of the front frame 14. Thus, it is possible to obtain the stable collision energy absorbing performance along the front-rear direction of the front frame 14.

As illustrated in FIGs. 3 and 4, the front frame corresponding portion 141 includes the rib 143 that abuts the rear end portion of the closed cross-sectional frame portion 142 from the front.

According to the configuration, even when the closed cross-sectional frame portion 142 receives the frontal collision load during the frontal collision, it is possible to reliably receive the closed cross-sectional frame portion 142 by the rib 143, which is provided in the front frame corresponding portion 141, in a state where the rear end thereof reliably abuts.

Thus, it is possible to efficiently transmit and disperse the frontal collision load from the closed cross-sectional frame portion 142 to the front frame corresponding portion 141, which supports the closed cross-sectional frame portion 142 from above and includes the rear portion thereof.

In correspondence between the configuration in the invention and the above-described embodiment, the cabin in the invention corresponds to the cabin CR. Similarly, the box-shaped cabin structure corresponds to the box-shaped cabin structure 1A, the cabin front surface portion corresponds to the cabin front surface portion 700, the front suspension corresponds to the front suspension 400, the front-wheel suspension housing corresponds to the suspension housing 11, the front space corresponds to the power unit room PR, the front frame corresponds to the front frame 14, the front frame corresponding portion corresponds to the front frame corresponding portion 141, the cast body corresponds to the cast body 500, the closed cross-sectional frame portion corresponds to the closed cross-sectional frame portion 142, the vehicle body reinforcing members correspond to the front end portions of the tunnel frame 4, the side sill 5, the front pillar 6, and the hinge pillar 7, the cowl side rein 8, the torque box 9, and the dash lower rein 10, the closed cross-section corresponds to the closed cross-section 14S, the upper arm corresponds to the upper arm 401, the attachment portion of the upper arm corresponds to the upper arm attachment portion 145, the sub-frame upper side portion corresponds to the upper arm support region UHZ, the extension portion corresponds to the extension region EZ, the front end portion of the extension portion corresponds to the front end portion 14a, the shock absorbing member corresponds to the crash can 37, the axis of the closed cross-sectional frame portion corresponds to the center axis AXa, the axis of the shock absorbing member corresponds to the center axis AXb, the axis of the front frame corresponding portion corresponds to the center axis AXc, the abutment portion corresponds to the rib 143, and the vehicle corresponds to the vehicle 1. The invention is not limited to the configuration in the above-described embodiment, and many embodiments can be obtained.

### [Reference Signs List]

1: vehicle
1A: box-shaped cabin structure
2: dash panel
4: tunnel frame
5: side sill
6: front pillar
7: hinge pillar
8: cowl side rein
9: torque box
10: dash lower rein
11: suspension housing
14: front frame
14a: front end portion
14S: closed cross-section
37: crash can
141: front frame corresponding portion
142: closed cross-sectional frame portion
143: rib
145: attachment portion
400: front suspension
401: upper arm
500: cast body
700: cabin front surface portion
AXa, AXb, AXc: center axis
CR: cabin
EZ: extension region
PR: power unit room
UHZ: upper arm support region

## Claims

1. A vehicle body structure of a vehicle (1) comprising:
a front-wheel suspension housing (11) that is provided to be spaced forward from a cabin front surface portion (700) constituting a front surface of a box-shaped cabin structure (1A) in which an outer frame of a cabin (CR) is formed in a box shape, and that covers a front suspension (400) from above;
a pair of left and right front frames (14) that extends in a vehicle front-rear direction on both left and right sides of a front space provided in front of the cabin front surface portion (700) and that supports the front-wheel suspension housing, wherein
the front space includes a cast body (500) that is integrally formed by including a front frame corresponding portion (141) that constitutes a part of the front frame (14)and the front-wheel suspension housing (11),
the front frame (14) includes:
the front frame corresponding portion (141); and
a closed cross-sectional frame portion (142) that is supported by the front frame corresponding portion (141) from above,
the front frame corresponding portion (141) extends along a front-rear direction and a rear end portion thereof is joined to a vehicle body reinforcing member provided in the cabin front surface portion (700),
the closed cross-sectional frame portion (142) includes:
a sub-frame upper side portion that constitutes a closed cross-section (14S) along the front-rear direction by joining, to each other, end portions of plural steel sheets and that is provided with an attachment portion (145) of an upper arm (401) of the front suspension (400); and
an extension portion that extends to the front of a front end portion (14a) of the front frame corresponding portion (141) from a front end portion of the attachment portion (145) of the upper arm (401), and
a shock absorbing member that absorbs a frontal collision load is coupled to a front end portion of the extension portion.

2. The vehicle body structure of the vehicle (1) according to claim 1, wherein
while a width in an up-down direction of the closed cross-sectional frame portion (142) is set to be gradually reduced to the rear, a width in the up-down direction of the front frame corresponding portion (141) is set to be gradually reduced to the front.

3. The vehicle body structure of the vehicle (1) according to claim 2, wherein
while the closed cross-sectional frame portion (142) is arranged such that an axis thereof along the front-rear direction is located on the same straight line as an axis of the shock absorbing member along the front-rear direction, the front frame corresponding portion (141) is arranged such that an axis thereof along the front-rear direction is displaced upward from the axis of the shock absorbing member along the front-rear direction until reaching the same height as an upper surface portion of the shock absorbing member or higher, and
the front frame corresponding portion (141) is formed such that a width thereof in the up-down direction is gradually increased to the rear from the front end portion (14a) of the front frame corresponding portion (141).

4. The vehicle body structure of the vehicle (1) according to any one of the preceding claims, wherein
the front frame corresponding portion (141) includes an abutment portion that abuts a rear end portion of the closed cross-sectional frame portion (142) from the front.

5. The vehicle bod structure of the vehicle (1) according to any one of the preceding claims, wherein the front frame corresponding portion (141) as the cast body (500) and the closed cross-sectional frame portion (142), which is made of the steel sheet, are configured and arranged to cooperatively absorb frontal collision energy.

6. The vehicle body structure of the vehicle (1) according to any one of the preceding claims, wherein the front frame corresponding portion (141) is disposed directly above the closed cross-sectional frame portion (142).

7. The vehicle body structure of the vehicle (1) according to any one of the preceding claims, wherein the closed cross-sectional frame portion (142) extends linearly in the front-rear direction at a position below the front frame corresponding front portion (141).

8. The vehicle body structure of the vehicle (1) according to any one of the preceding claims, wherein the front frame corresponding front portion (141) has an H-shaped cross section.

9. The vehicle body structure of the vehicle (1) according to claim 8, wherein the H-shaped cross section is orthogonal to the front-rear direction by a base plate portion (141a) along the vehicle width direction, an outer wall portion (141b) that protrudes in the up-down direction from an outer end of the base plate portion (141a) in the vehicle width direction, and an inner wall portion (141c) that protrudes in the up-down direction from an inner end of the base plate portion (141a) in the vehicle width direction.

10. The vehicle body structure of the vehicle (1) according to any one of the preceding claims, wherein a rear end portion of the front frame rear portion (14R) is formed with, as a rear end flange portion (14f) along a peripheral edge of a rear opening, an upper wall rear end flange portion (14fa), an outer wall rear end flange portion (14fb), an inner wall rear end flange portion (14fc), and a lower wall rear end flange portion (14fd).

11. The vehicle body structure of the vehicle (1) according to claim 10, wherein the upper wall rear end flange portion (14fa) is formed to protrude upward from a rear end of the upper wall portion (14Ra) of the front frame rear portion (14R) along the rear end.

12. The vehicle body structure of the vehicle (1) according to claim 10 or 11, wherein the outer wall rear end flange portion (14fb) is formed to protrude outward from a rear end of the outer wall portion (14Rc) of the front frame rear portion (14R) toward the vehicle width outer side along the rear end and/or wherein the inner wall rear end flange portion (14fc) is formed to protrude from a rear end of the inner wall portion (14Rd) of the front frame rear portion (14R) to the vehicle width inner side along the rear end.

13. The vehicle body structure of the vehicle (1) according to any one of claims 10 to 12, wherein the lower wall rear end flange portion (14fd) is formed to protrude downward from a rear end of the lower wall portion (14Rb) of the front frame rear portion (14R) along the rear end.

14. The vehicle body structure of the vehicle (1) according to any one of the preceding claims, wherein the cast body (500) includes one of more of the following elements: a pair of the left and right front frame corresponding portions (141), a pair of the left and right apron frame body portions (181), a pair of the left and right apron support frames (19), a pair of the left and right suspension housings (11), a pair of the left and right coupling margin portions (501), a bridge portion (16), wherein preferably the cast body (500) is made of an aluminum alloy, in which one or more of these elements are integrally molded.

15. A vehicle (1) comprising a vehicle body structure according to any one of the preceding claims.
